# EUROPÄISCHE PATENTSCHRIFT

(11) **EP 0 376 916 B1**
(45) Veröffentlichungstag und Bekanntmachung des Hinweises auf die Patenterteilung: **15.09.1993**
(21) Anmeldenummer: 89890331.5
(22) Anmeldetag: 22.12.1989
(51) Int. Cl.: E03F 3/04, E02D 29/10, E21D 11/08, F16L 55/165, F16L 9/08

(54) **Verfahren zum Sanieren bestehender Kanäle, Schächte, Stollen od. dgl.**
Method for the reconstruction of existing canals, shafts, tunnels or the like
Méthode d'assainissement de canaux, puits, galeries existantes ou similaires

(30) Priorität: 30.12.1988 AT 3210/88
(43) Veröffentlichungstag der Anmeldung: 04.07.1990
(73) Patentinhaber: WIENER BETRIEBS- UND BAUGESELLSCHAFT M.B.H., A-1153 Wien (AT)
(72) Erfinder: Gradl, Herbert, A-1030 Wien (AT)
(74) Vertreter: Gibler, Ferdinand, Dipl.Ing. Dr. techn.

(56) Entgegenhaltungen:
- EP-A- 0 060 134
- EP-A- 0 132 066
- WO-A-83/02490

## Beschreibung

Die Erfindung bezieht sich auf ein Verfahren zum Sanieren bestehender Kanäle, Schächte, Stollen od. dgl. Bauwerke, insbesondere solcher, welche als Profilbauwerke hergestellt sind.

Bei Bauwerken dieser Art, die eine Innenauskleidung in Form von Ziegel, Steinen, Betonprofilen etc. aufweisen oder daraus bestehen können oder direkt unter Tag, z.B. im Fels, errichtet sind, ergibt sich das Problem, daß auftretende Risse, die z.B. durch Verdrückungen, Korrosion bzw. Verwitterung, entstehen und/oder durch Aufsprengungen durch Wurzeln bedingt sind, abgedichtet werden müssen. Dies ist durch Einzelmaßnahmen nur in beschränktem Ausmaß möglich, sodaß bisher bei größeren Schäden ein neues Bauwerk hergestellt werden mußte. Dabei ergaben sich aber stets erhebliche Probleme, insbesondere aufgrund der dabei erforderlichen Tiefbauarbeiten, die z.B. im Falle von Abwasserkanälen auch den Straßenverkehr stark behindern.

Ziel der Erfindung ist es diese Nachteile zu vermeiden und ein Verfahren der eingangs genannten Art vorzuschlagen, das eine Sanierung von Kanälen, Schächten, Stollen od. dgl. Bauwerke mit geringem Aufwand ermöglicht.

Erfindungsgemäß wird dies dadurch erreicht, daß in das bestehende Bauwerk, gegebenenfalls nach einer Reinigung desselben und Ausbesserung allfälliger Risse, Hohlräume od.dgl. sowie Abtragung von in das Bauwerk hineinragender Verdrückungen, und allfälliger Abarbeitung des Innenprofils des bestehenden Bauwerkes, Fertigteilstücke nacheinander unter Bildung eines Profils eingesetzt und miteinander dicht und kraftschlüssig, vorzugsweise mittels Kleber, verbunden werden, wonach der zwischen der Innenwand des zu sanierenden Bauwerkes und der Außenwand des Profils verbleibende Raum mit einer erhärtenden Masse hinterfüllt wird, die mit den Außenseiten der das Profil bildenden eingesetzten Fertigteilstücke kraftschlüssig abbindet.

Durch diese Maßnahmen wird praktisch im Inneren des bestehenden, sanierungsbedürftigen Bauwerkes ein neuer Kanal, Schacht, Stollen od.dgl. Bauwerk eingebaut. Auf diese Weise werden die oberirdischen Bauarbeiten auf ein Minimum beschränkt, da die Fertigteilstücke durch Arbeitsschächte oder neu zu errichtende Einstiegsschächte eingebracht werden können. Auch erfordert der Einbau nur relativ wenig Aufwand und kann in kleinen Abschnitten erfolgen, wobei der jeweilige Bauabschnitt abgeschottet und trockengelegt werden kann, wobei eventuell anfallendes bzw. eindringendes Wasser über eine Bypassleitung umgepumpt werden kann.

Dadurch, daß die hinterfüllte Masse mit der Außenseite der eingesetzten Fertigteilstücke kraftschlüssig abbindet, entsteht eine Verbundwirkung, die es ermöglicht, die Dimensionierung der Gesamtwandstärke von hinterfüllter Masse und Fertigteilstücken nach den zu erwartenden Belastungen zu wählen. Diese Dimensionierung kann umso genauer erfolgen, je genauer der Profilquerschnitt des zu sanierenden Rauwerkes vorgegeben ist, weshalb es von Vorteil sein kann, diesen im Zuge des erfindungsgemäßen Verfahrens abzuarbeiten.

Bei den Ausbesserungen von Rissen, Hohlräumen od. dgl. ist es keinesfalls erforderlich diese vollständig abzudichten, sondern es genügt, diese soweit zu schließen, daß die Hinterfüllmasse nicht entweichen kann.

Erfolgt der Einbau des neuen Profils in ein zu sanierendes, flüssiges Medium, wie z.B. Wasser führendes, Bauwerk derart, daß sich der Bauwerkquerschnitt verringert, so stellt dies an sich keinen Nachteil dar, weil sich andererseits auf Grund der glatteren Oberfläche des neuen Profils der Reibungsbeiwert verringert, sodaß eine Querschnittsverminderung zufolge der nunmehr höheren Strömungsgeschwindigkeit des im Bauwerk geführten flüssigen Mediums wieder ausgeglichen wird.

Um den Einbau des Profils zu erleichtern, ist es vorteilhaft, wenn vor dem Einsetzen der Fertigteilstücke in das bestehende Bauwerk in dessen Sohle Bügeln bzw. Abstützsockeln eingesetzt bzw. eingebracht werden.

Dies ermöglicht es auf einfache Weise die richtige Höhenlage der einzusetzenden Fertigteilstücke in dem zu sanierenden Bauwerk einzuhalten, wobei die einzusetzenden Fertigteilstücke lediglich auf die Bügel bzw. Abstützsockel aufgesetzt zu werden brauchen.

In diesem Zusammenhang ist es weiters vorteilhaft, wenn das in das bestehende Bauwerk einzusetzende Profil aus mehreren Fertigteilstücken zusammengesetzt wird, die miteinander kraftschlüssig verbunden, insbesondere verklebt werden.

Auf diese Weise läßt sich der Einbau des Profiles, insbesondere der Transport der einzelnen Fertigteilstücke an deren Einbauort leichter bewerkstelligen.

Um eine hohe Lebensdauer des eingesetzten Profils zu gewährleisten, kann weiters vorgesehen sein, daß die einzusetzenden Fertigteilstücke aus Polymerbeton, z.B. einem im flüssigen bzw. teigigen Zustand verarbeitbaren Gemisch aus Füllmaterialien, wie Quarzsand, Kies, Glasfasern, Asbest-, Stahl-, und/oder Polypropylenfasern u.dgl. und Polymerharzen, wie Epoxid- oder Polyesterharzen, als Bindemittel hergestellt sind.

Solche Profile zeichnen sich durch eine hohe Beständigkeit gegen praktisch alle insbesondere in Abwässern vorkommenden agressiven Stoffe und Substanzen aus.

Nach einem weiteren Merkmal der Erfindung kann vorgesehen sein, daß der zwischen den eingesetzten Fertigteilstücken und dem bestehenden Bauwerk verbleibende Hohlraum mit einem dem Material der eingesetzten Fertigteilstücke entsprechenden oder einem zu diesem affinen, mit dem Fertigteilmaterial einen kraftschlüssigen Verbund eingehenden, aushärtbaren Material hinterfüllt wird.

Durch diese Hinterfüllung kommt es zu einem kraftschlüssigen Verbund zwischen den eingesetzten Fertigteilstücken und der Hinterfüllung. Eine statische Aufgabe kommt dem Profil des bestehenden Bauwerkes nach dem Erhärten der Hinterfüllmasse dann nicht mehr zu, da das eingesetzte Profil in Verbindung mit der ab- und verbundenen Hinterfüllung die gesamten zu erwartenden Belastungen aufnehmen kann.

Bei Versuchen hat es sich als besonders zweckmäßig erwiesen, wenn die aus Polymerbeton bestehende, der Hinterfüllung dienende erhärtbare Masse vor Ort dosiert und homogenisiert wird, wobei es sich dann als besonders zweckmäßig herausgestellt hat, wenn die aus Polymerbeton bestehende der Hinterfüllung dienende erhärtbare Masse durch Pumpen in den Hohlraum zwischen dem bestehenden Bauwerk und den eingesetzten Fertigteilstücken eingebracht wird, wobei gegebenenfalls auf die Innenwände der den Hohlraum beaufschlagenden Pumpzufuhrleitungen vorzugsweise durch Sprühen eine Gleitschicht aufgebracht wird.

Weiters kann vorgesehen sein, daß für die Einbindung von Stichzuleitungen wie Stichkanälen, -schächten, -stollen od. dgl., wie z.B. von Hausanschlüssen im Falle von Abwasserkanälen, in das eingesetzte Profil diese Stichzuleitungen ausgemessen und vor dem Einsetzen des entsprechenden Fertigteilstückes entsprechende Öffnungen in diesen ausgeschnitten und nach dem Einsetzen dieser bzw. dieses Fertigteil stückes die(der) Stichkanal-, schacht, -stollen od. dgl. verlängert und vor dem Hinterfüllen des Raumes zwischen dem bestehenden Bauwerk und den das Profil bildenden eingesetzten Fertigteilstücken die Öffnung(en) in den bzw. im Fertigteilstück mit einer erhärtenden Masse, vorzugsweise Kunstharzmörtel, verschlossen wird(werden).

Dies ermöglicht es die Sanierung eines Kanals, Schachts, Stollen od. dgl. Bauwerkes in kleinen Abschnitten durchzuführen, wobei die Stichzuleitungen, wie Stichkanäle, stollen od.dgl. nur für relativ kurze Zeit abgesperrt werden müssen, da auf diese Weise eine weitgehende Vorfertigung der Profile bzw. deren Fertigteilstücke möglich bzw. gegeben ist.

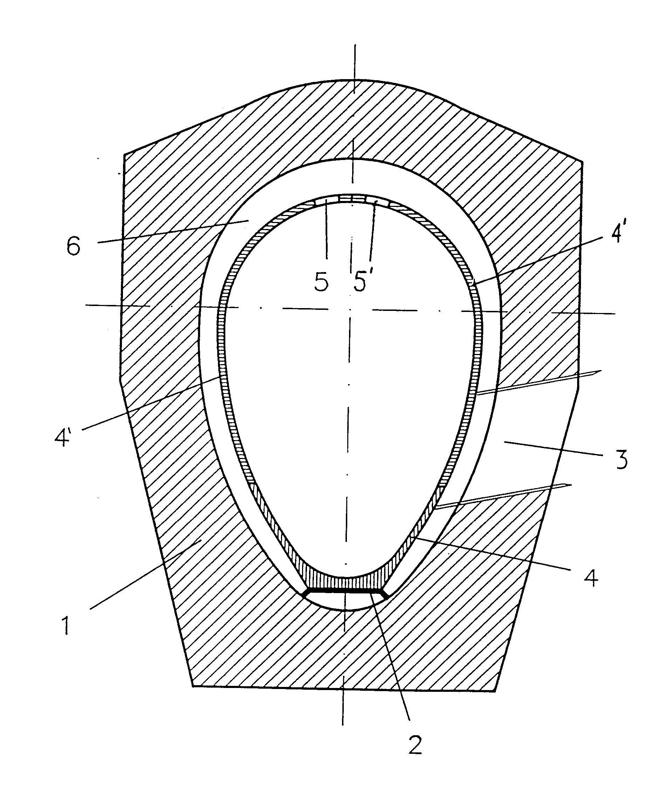

Die Erfindung wird nun anhand der Zeichnung näher erläutert, die einen Querschnitt durch ein nach dem erfindungsgemäßen Verfahren saniertes Bauwerk zeigt. Bei dem in der Zeichnung mit 1 bezeichneten zu sanierenden Bauwerk kann es sich um einen Kanal, Schacht, Stollen od. dgl. handeln. Das zu sanierende Bauwerk 1 wird abschnittweise abgeschottet und gereinigt und - wenn notwendig - vorhandene Risse bzw. Hohlräume entsprechend ausgebessert, wozu zweckmäßigerweise ein Kunstharzmörtel verwendet wird und es lediglich darauf ankommt soweit zu sanieren, daß die Hinterfüllmasse nicht durch die Risse bzw. Hohlräume entweichen kann. Danach wird das vorhandene Kanalprofil im Hinblick auf das lichte Profil vermessen und allenfalls in das Sollprofil hineinragende Verdrückungen werden abgearbeitet. Gegebenenfalls kann das Innenprofil des bestehenden Bauwerkes abgearbeitet werden, z.B. derart weitgehend, daß das Bauwerk nach der Sanierung wieder seinen ursprünglichen Querschnitt aufweist. Die Abarbeitung wird bevorzugt maschinell erfolgen, z.B. durch Fräsen, Schneiden, Hobeln oder dergleichen. Diese maschinelle Abarbeitung ermöglicht eine maßgenaue Profilkorrektur; durch eine erschütterungsarme Abarbeitung erfolgt eine weitgehende Schonung des Bauwerkes. Auch kann durch die maschinelle Abarbeitung die Lage des neuen Profils optimiert werden, z.B. Abweichungen von der Geradlinigkeit oder Verdrückungen korrigiert oder Abänderungen an der Profilgestalt vorgenommen werden.

Anschließend werden im Bereich der Kanalsohle Bügeln 2 bzw. Abstutzsockeln angebracht; die Bügeln können durch ein im wesentlichen C-förmiges Stahlprofil gebildet sein. Weiters werden auch die Stichzuleitungen 3, wie z.B. Hausanschlüsse im Falle eines zu sanierenden Abwasserkanals, vermessen.

In den auf diese Weise vorbereiteten zu sanierenden Kanal, Schacht, Stollen od.dgl. Bauwerk werden Fertigteilstücke 4, 4′ unter Bildung eines umfangsgeschlossenen Profils eingesetzt; die Fertigteilstücke können durch vorhandene Arbeitsschächte oder neu zu errichtende Einstiegsschächte eingebracht werden. Dabei wird zuerst das Sohlstück 4 eingesetzt und auf dieses das Deckstück 4′ unter Bildung eines umfangsgeschlossenen Profils aufgesetzt und alle Stücke miteinander kraftschlüssig verklebt; die Formstücke 4-4′ müssen nicht notwendigerweise aus einem Stück bestehen, sondern können auch mehrteilig ausgebildet sein. Dabei werden vor dem Einsetzen in das Bauwerk 1 dem Stichanschluß 3 entsprechende Ausnehmungen in die beiden Fertigteilstücke 4, 4′ eingeschnitten und damit der Anschluß desselben vorbereitet.

Nach dem Einsetzen und kraftschlüssigen Verbinden der Fertigteilstücke 4, 4′ wird der Stichanschluß 3 verlängert, sodaß dieser in das Innere des Profils hineinragt bzw. mit dessen Innenwand abschließt. Die verbleibende Öffnung wird mit einem Kunststoffmörtel abgedichtet. In gleicher Weise können stirnseitig an die bereits eingebauten Fertigteilstücke 4, 4′ zwecks Vorbau des neuen Profils in Längsrichtung des Bauwerkes weitere Fertigteilstücke angeschlossen, d.h. mit diesen stirnseitig dicht und kraftschlüssig verbunden, insbesondere verklebt werden. Nach Erstellung eines solchen neuen Profils bestimmter Länge , die sich im wesentlichen nach der baulichen und konstruktiven Beschaffenheit des zu sanierenden Bauwerkes richten wird, wird der Hohlraum 6 stirnseitig geschlossen und der somit zwischen dem Bauwerk 1 und dem durch die Fertigteilstücke 4, 4′ gebildeten neuen Profil verbleibende geschlossene Hohlraum 6 mit einer erhärtenden Masse hinterfüllt, die mit den Außenseiten der das neue Profil bildenden, eingesetzten Fertigteilstücke 4, 4′ kraftschlüssig abbindet. Dazu sind im Bereich des höchsten Punktes zwei Öffnungen 5, 5′ angeordnet, die zum Einbringen der Masse in den Hohlraum 6 und zu dessen Entlüftung während des Einbringens in den Hohlraum 6 dienen. Nach der erfolgten Einbringung des Hinterfüllmaterials werden die Öffnungen 5, 5′ mit einem Kunststoffmörtel verspachtelt.

Auf diese Weise kann das zu sanierende Bauwerk abschnittweise mit Profilstücken 4, 4′ versehen werden.

In Bogenbereichen des Bauwerkes ist es vorteilhaft, abgelängte Profilstücke einzusetzen, um diese dem Radius des Verlaufes des zu sanierenden Bauwerkes anpassen zu können.

Die einzelnen Profilstücke 4, 4′ sind aus Polymerbeton hergestellt. Dieser besteht im wesentlichen aus einem im flüssigen bzw. teigigen Zustand verarbeitbaren Gemisch aus Füllmaterial wie Quarzsand, Kies, Glasfaser, Asbest-, Stahl- und/oder Polypropylenfasern und einem Polymerharz als Bindemittel wie z.B. einem Epoxi- oder Polyesterharz. Die genaue Rezeptur ist dabei jeweils an die örtlichen Verhältnisse und die Herstellungsbedingungen anzupassen und hängt auch von der Verarbeitungstemperatur ab, wobei die Rezeptur durch Versuche an Ort und Stelle ermittelt werden kann.

Der zwischen den eingesetzten Fertigteilstücken und dem bestehenden Bauwerk verbleibende Hohlraum wird mit einem dem Material der eingesetzten Fertigteilstücke entsprechenden, wie vorstehend angegebenen, oder einem zu diesem affinen, mit dem Fertigteilmaterial einen kraftschlüssigen Verbund eingehenden aushärtbaren Material hinterfüllt.

Die Wandstärke des aus den eingesetzten Fertigteilstücken 4, 4′ und der mit ab- und verbundenen Hinterfüllmasse gebildeten Verbundsystems ist derart bemessen, daß diese die zu erwartenden Belastungen sicher aufnehmen können.

Besteht die Hinterfüllmasse aus Polymerbeton, so kann die Dosierung und Homogenisierung desselben vor Ort erfolgen. Die Einbringung dieser Hinterfüllmasse in den Hohlraum 6 erfolgt zweckmäßigerweise durch Pumpen, wobei die Pumpzuführleitungen an der bzw. den Öffnungen 5, 5′ angeschlossen sind. Auf die Innenwände der den Hohlraum beaufschlagenden Pumpzufuhrleitungen kann vorzugsweise durch Sprühen eine Gleitschicht aufgebracht werden.

Vorstehend ist die Erfindung anhand eines Ausführungsbeispieles erläutert worden, bei welchem zur Erstellung des neuen Profils wenigstens ein Profilring verwendet wird, der an Ort und Stelle aus einem Sohlstück und einem ein- oder zweistückigen Deckstück 4′ zusammengesetzt wird. Alternativ kann dieser Profilring jedoch aus einer beliebigen Anzahl von Stücken zusammengesetzt sein, was insbesondere im Falle von Verschneidungen mit anderen, kreuzenden oder einmündenden Bauwerken oder im Falle einer stark gekrümmten bzw. verknickten Streckenführung des Bauwerkes von Bedeutung sein wird.

Im Rahmen der vorliegenden Erfindung ist aber auch eine Ausführungsvariante möglich, bei welcher ein einstückiges, umfangsgeschlossenes, dem neuen Profil bereits entsprechendes Profilstück, also ein geschlossener einstückiger Profilring Verwendung findet, wobei zwecks Aufbau einer aus mehreren solchen Profilringen zusammengesetzten mit erhärtbarer Masse zu hinterfüllenden Profilstrecke diese ringförmigen Profilstücke in Bauwerklängsrichtung aneinandergesetzt und kraftschlüssig sowie dicht miteinander verbunden werden. Diese Verfahrensvariante wird insbesondere dann von besonderem Vorteil sein, wenn die konstruktive Beschaffenheit des Bauwerkes die Anbringung von Einstiegsschächten entsprechender radialer Erstreckung erlaubt und die Abmessungen der Profilstückringe keine nennenswerten Transportprobleme bedingen.

## Patentansprüche

1. Verfahren zum Sanieren bestehender Kanäle, Schächte, Stollen od. dgl. Bauwerke, insbesondere solcher, die als Profilbauwerke ausgeführt sind, **dadurch gekennzeichnet**, daß in das bestehende Bauwerk, gegebenenfalls nach einer Reinigung desselben und Ausbesserung allfälliger Risse, Hohlräume od. dgl., sowie Abtragung von in das Bauwerk (1) hineinragender Verdrückungen, und allfälliger Abarbeitung des Innenprofils des bestehenden Bauwerkes (1), eine Auskleidung aus Fertigteilstücken (4,4') nacheinander unter Bildung eines Profils eingesetzt und miteinander dicht und kraftschlüssig, vorzugsweise mittels Kleber, verbunden werden, wonach der zwischen der Innenwand des zu sanierenden Bauwerkes (1) und der Außenwand der Fertigteilstücke (4,4') verbleibende Hohlraum (6) mit einer erhärtenden Masse hinterfüllt wird, die mit den Außenseiten der das Profil bildenden eingesetzten Fertigteilstücke (4,4') kraftschlüssig abbindet.

2. Verfahren nach Anspruch 1, **dadurch gekennzeichnet,** daß vor dem Einsetzen der Fertigteilstücke (4,4') in das bestehende Bauwerk (1) in dessen Sohle Sohlbügel (2) bzw. an sich bekannte Abstützsockeln eingesetzt bzw. eingebracht werden.

3. Verfahren nach Anspruch 1 oder 2, **dadurch gekennzeichnet**, daß die in das bestehende Bauwerk (1) einzusetzende Auskleidung, wie an sich bekannt, aus einem oder mehreren Fertigteilstücken (4,4') zusammengesetzt wird, die miteinander kraftschlüssig verbunden, insbesondere verklebt werden.

4. Verfahren nach einem der Ansprüche 1 bis 3, **dadurch gekennzeichnet**, daß die einzusetzenden Fertigteilstücke (4,4') aus an sich bekanntem Polymerbeton, z.B. einem im flüssigen bzw. teigigen Zustand verarbeitbaren Gemisch aus Füllmaterialien, wie Quarzsand, Kies, Glasfasern, Asbest-, Stahl-, und/oder Polypropylenfasern u.dgl. und Polymerharzen, wie Epoxid- oder Polyesterharzen, als Bindemittel hergestellt sind.

5. Verfahren nach den Ansprüchen 1 oder 4, wobei die aus Polymerbeton bestehende der Hinterfüllung dienende erhärtbare Masse durch Pumpen in den Hohlraum zwischen dem bestehenden Bauwerk (1) und den eingesetzten Fertigteilstücken (4,4') eingebracht wird, **dadurch gekennzeichnet**, daß gegebenenfalls auf die Innenwände der den Hohlraum (6) beaufschlagenden Pumpzufuhrleitungen vorzugsweise durch Sprühen eine Gleitschicht aufgebracht wird.

6. Verfahren nach den Ansprüchen 1,3,4 oder 5, bei dem für die Einbindung von Stichzuleitungen (3) wie Stichkanälen, -schächten, -stollen od.dgl., wie z.B. von Hausanschlüssen im Falle von Abwasserkanälen in die Auskleidung diese Stichzuleitungen (3) ausgemessen und vor dem Einsetzen des entsprechenden Fertigteilstückes (4,4') entsprechende Öffnungen in diesen ausgeschnitten werden, **dadurch gekennzeichnet**, daß nach dem Einsetzen dieser bzw. dieses Fertigteilstückes (4,4') die Stichzuleitung (3) verlängert und vor dem Hinterfüllen des Hohlraumes (6) zwischen dem bestehenden Bauwerk (1) und den die Auskleidung bildenden eingesetzten Fertigteilstücken (4,4') die Öffnung(en) (5,5') in den bzw. im Fertigteilstück (4,4') mit einer erhärtenden Masse, vorzugsweise Kunstharzmörtel, verschlossen wird(werden).

## Claims

1. Process for refurbishing existing sewers, shafts, tunnels or similar structures, in particular those which are built as profile structures, characterised in that, if necessary after cleaning thereof and repair of any cracks, voids or the like, and removal of pinch-outs protruding into the structure (1) and, if necessary, machining of the inside profile of the existing structure (1), a lining of prefabricated pieces (4,4') is inserted successively into the existing structure to form a profile and joined together tightly and non-positively, preferably by means of adhesive, whereupon the cavity (6), remaining between the inner wall of the structure (1) to be refurbished and the outer wall of the prefabricated pieces (4,4'), is backfilled with a hardening mass which sets by bonding non-positively to the outsides of the inserted prefabricated pieces (4,4') forming the profile.

2. Process according to Claim 1, characterised in that, before the insertion of the prefabricated pieces (4,4') into the existing structure (1), bottom brackets (2) or support plinths known per se are inserted or introduced into the bottom thereof.

3. Process according to Claim 1 or 2, characterised in that the lining to be inserted into the existing structure (1) is, as known per se, assembled from one or more prefabricated pieces (4,4') which are non-positively bonded to one another, in particular adhesively.

4. Process according to one of Claims 1 to 3, characterised in that the prefabricated pieces (4,4') to be inserted have been produced from polymer concrete known per se, for example a mixture, which can be processed in the liquid or pasty state, of filler materials such as quartz sand, gravel, glass fibres, asbestos fibres, steel fibres and/or polypropylene fibres and the like and polymer resins, such as epoxide resins or polyester resins, as binder.

5. Process according to Claims 1 or 4, in which the hardenable mass consisting of polymer concrete and serving for backfilling is introduced by pumping into the cavity between the existing structure (1) and the inserted prefabricated pieces (4,4'), characterised in that, if appropriate, a sliding layer is applied, preferably by spraying, to the inner walls of the pump feed lines charging the cavity (6).

6. Process according to Claims 1, 3, 4 or 5, in which, for tying in branch inlet lines (3) such as branch sewers, shafts, tunnels or the like, such as, for example, house connections in the case of effluent drains, into the lining, these branch inlet lines (3) are measured and, before insertion of the corresponding prefabricated piece (4,4'), corresponding openings are cut out of these, characterised in that, after the insertion of this or these prefabricated piece(s) (4,4'), the branch inlet line (3) is extended and, before the cavity (6) between the existing structure (1) and the inserted prefabricated pieces (4,4') forming the lining is backfilled, the opening(s) (5,5') in the prefabricated piece or pieces (4,4') is or are sealed with a hardening mass, preferably synthetic resin mortar.

## Revendications

1. Procédé de rénovation d'égoûts, puits, galeries ou autres ouvrages existants, notamment des ouvrages construits avec un profil déterminé, caractérisé en ce que, à la suite d'un nettoyage et d'une réparation des éventuels fissures, trous et similaires ainsi que d'une suppression des étranglements intérieurs des ouvrages (1) existants, on place dans ces derniers un revêtement intérieur fait d'éléments préfabriqués (4, 4') successifs mis au profil et reliés les uns aux autres d'une manière étanche et résistante par exemple à l'aide d'un adhésif et, ensuite, on comble le volume libre (6) restant entre la paroi intérieure de l'ouvrage (1) à restaurer et la paroi extérieure des éléments préfabriqués (4, 4') avec une masse durcissable qui se lie à la paroi extérieure des éléments préfabriqués (4, 5') profilés mis en place.

2. Procédé selon la revendication 1, caractérisé en ce que, préalablement à la mise en place des éléments préfabriqués (4, 4') dans l'ouvrage exsitant (1), on rapporte ou on dépose sur son radier des pontets (2) ou des socles d'appui.

3. Procédé selon la revendication 1 ou 2, caractérisé en ce que le revêtement rapporté dans l'ouvrage existant (1) se compose, comme connu, d'un ou plusieurs éléments préfabriqués (4, 4') qui sont reliés mutuellement de manière robuste, notamment par collage.

4. Procédé selon l'une des revendications 1 à 3, caractérisé en ce qu'on fabrique les éléments préfabriqués (4, 4') à rapporter en un béton de polymère connu, fait par exemple d'un mélange apte à être prépréparé à l'état liquide ou pâteux d'une charge, tel du sable quartzeux, du gravier, des fibres de verre, de l'amiante, de l'acier et/ou des fibres de polypropylène et similaires et d'un liant tel une résine polymérique comme une résine époxyde ou polyesther.

5. Procédé selon la revendication 1 ou 4, où la masse durcissable de bêton de polymère servant de remplissage est introduite par pompage dans le volume libre entre l'ouvrage existant (1) et les éléments préfabriqués (4, 4') mis en place, caractérisé en ce que, le cas échéant, on dépose par exemple par projection une couche de lissage sur la surface intérieure des conduits d'arrivée de pompage introduits dans le volume libre (6).

6. Procédé selon les revendications 1, 3, 4 ou 5 où, en vue du raccordement de branchements (3) tels des égoûts, puits, galeries ou similaires comme des branchements particuliers domestiques pour eaux usées au revêtement, on mesure ces branchements (3) et on découpe des orifices correspondant dans les éléments préfabriqués (4, 4') préalablement à leur mise en place, caractérisé en ce qu'après la mise en place d'au moins un de ces éléments préfabriqués (4, 4') on prolonge le branchement (3) et en ce que, préalablement au comblement du volume libre (6) entre l'ouvrage existant (1) et le revêtement constitué par les éléments préfabriqués (4, 4') mis en place, on bouche l'(es) orifice(s) (5, 5') des éléments préfabriqués avec une masse durcissable, tel un mortier de résine synthétique.
